# EUROPÄISCHE PATENTSCHRIFT

(11) **EP 4 209 377 B1**
(45) Veröffentlichungstag und Bekanntmachung des Hinweises auf die Patenterteilung: **22.07.2026**
(21) Anmeldenummer: 23157519.2
(22) Anmeldetag: 28.02.2018
(51) Int. Cl.: B60K 35/00, B60K 35/10, B60K 35/21, B60K 35/22, B60K 35/28, B60K 35/29, B60K 35/60

(54) **FAHRSYSTEM ZUM AUTOMATISIERTEN FAHREN MIT EINER LENKRADANZEIGE UND ANZEIGEVERFAHREN**
DRIVING SYSTEM FOR AUTOMATED DRIVING WITH A STEERING WHEEL DISPLAY AND DISPLAY METHOD
SYSTÈME DE CONDUITE POUR CONDUITE AUTOMATISÉE AVEC AFFICHAGE DE VOLANT DE DIRECTION ET PROCÉDÉ D'AFFICHAGE

(30) Priorität: 28.03.2017 DE 102017205260
(43) Veröffentlichungstag der Anmeldung: 12.07.2023
(62) Teilanmeldung aus: 18709308.3
(73) Patentinhaber: Bayerische Motoren Werke Aktiengesellschaft, 80809 München (DE)
(72) Erfinder: Niemann, Julia, 12161 Berlin (DE); Kerschbaum, Philipp, 80339 München (DE); Breisinger, Marc, 80799 München (DE); Suessenguth, Philipp, 80639 München (DE); Mueller, Stephan, 80335 München (DE); Eichhorn, Julian, 21682 Stade (DE); Lorenz, Lutz, 82041 Deisenhofen (DE)

(56) Entgegenhaltungen:
- DE-A1- 102007 052 258
- DE-A1- 102015 016 056
- US-A1- 2016 257 248

## Beschreibung

Die Erfindung betrifft ein Fahrsystem zum automatisierten Fahren mit einer Lenkradanzeige sowie ein Anzeigeverfahren für ein derartiges Fahrsystem.

Bei einem Fahrsystem zum automatisierten oder autonomen Fahren mit automatisierter Längs- und Querführung sind häufig verschiedene Fahrmodi mit unterschiedlichem Automatisierungsgrad wählbar. Beispielhafte Automatisierungsgrade sind ein assistiertes, teilautomatisiertes, hochautomatisiertes oder vollautomatisiertes Fahren. Diese Automatisierungsgrade entsprechen beispielsweise der Definition der Bundesanstalt für Straßenwesen (BASt) (siehe BASt-Publikation "Forschung kompakt", Ausgabe 11/2012). Beispielsweise kann häufig ein assistierter Fahrmodus ausgewählt werden, bei dem der Fahrer dauerhaft die Querführung (d. h. das Lenken des Fahrzeugs) ausführt, während das System die Längsführung (beispielsweise die Beschleunigung) des Fahrzeugs in gewissen Grenzen übernimmt. Bei Betrieb eines Fahrsystems in einem teilautomatisierten Fahrmodus übernimmt das System die Längs- und Querführung für einen gewissen Zeitraum und/oder in spezifischen Situationen, wobei der Fahrer das System wie beim assistierten Fahren dauerhaft überwachen muss. Hierbei kann unterschieden werden zwischen einem teilautomatisierten Hands-on-Fahrbetrieb, bei dem der Fahrer aus Sicherheitsgründen eine oder beide Hände am Lenkrad halten muss, und einem teilautomatisierten Hands-off-Fahrbetrieb, bei dem der Fahrer auch die Hände vom Lenkrad nehmen kann. Es wird beispielsweise systemseitig vom teilautomatisierten Hands-Off-Fahrbetrieb in den teilautomatisierten Hands-on-Fahrbetrieb in bestimmten Situationen umgeschaltet. Bei Betrieb des Fahrsystems in einem hoch- oder vollautomatisierten Fahrmodus übernimmt das System die Längs- und Querführung, ohne dass der Fahrer das System dauerhaft überwachen muss. Beim hochautomatisierten Fahren muss der Fahrer aber in einer gewissen Zeit in der Lage sein, die Fahrzeugführung zu übernehmen, nachdem das Fahrzeug den Fahrer durch eine Übernahme-Aufforderung hierzu aufgefordert hat. Beim vollautomatisierten Fahren kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) dem Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Der jeweilige Automatisierungsstatus hinsichtlich der Längs- und Querführung des aktuell vorliegenden Fahrmodus wird bei bekannten Fahrsystemen zum automatisierten Fahren häufig über Statusleuchten, bildliche Darstellungen und/oder Text im Kombiinstrument und/oder im HUD (HUD - Head-up-Display) angezeigt. Mitunter werden auch Statusleuchten am Bedienelement zur Fahrmodi-Auswahl (z.B. Taster) genutzt, um den Automatisierungszustand hinsichtlich Längs- und Querführung anzuzeigen. Übernahmeaufforderungen oder die Aufforderung, die Hände ans Lenkrad zu legen (z.B. bei einem Stauassistenten), werden in der Regel ebenfalls im Kombiinstrument oder HUD angezeigt. Darüber hinaus ist es bekannt, zur Auswahl eines automatisierten Fahrmodus und Signalisierung des aktiven Fahrmodus den Getriebewahlschalter zu verwenden (s. beispielsweise DE 10 2007 029 594 A1).

Wenn ein Fahrzeug hochautomatisiert fährt, nimmt der Fahrer zusätzlich zu der fahrdynamischen Beschleunigung die Querführung wahr, da sich das Lenkrad je nach Fahrsituation automatisch dreht und der Fahrer die automatisierte Lenkwinkelstellung sieht.

Der Automatisierungsstatus wird bei bekannten Fahrsystemen häufig nicht an dem vornehmlich wahrgenommenen Ort der Automatisierung (Lenkrad), sondern davon entfernt am Kombiinstrument dargestellt. Dies ist nicht ideal unter logischen und gestalterischen Gesichtspunkten.

Übernahmeaufforderungen und/oder die Aufforderung, die Hände ans Lenkrad zu legen, werden vornehmlich nicht an dem Ort angezeigt, an dem der Fahrer aktiv werden soll (d. h. Lenkrad), sondern ebenfalls davon entfernt (d. h. im Kombiinstrument oder im HUD). Auch dies ist nicht ideal im Sinne der Bedienlogik und der Reaktionsgeschwindigkeit des Fahrers.

Aus der Druckschrift DE 10 2011 112 134 A1 ist bereits ein Lenkrad bekannt, dessen Lenkradkranz Lichtquellen aufweist. Bei Aktivieren des autonomen Fahrbetriebs des Fahrzeugs werden die Lichtquellen des Lenkradkranzes aktiviert.

Ferner beschreibt die Druckschrift DE 10 2013 012 779 A1 die Verwendung einer bogenförmigen Leuchteinheit im Lenkradkranz zur optischen Signalisierung der Aktivierung eines automatischen Fahrmodus und zur optischen Signalisierung einer Übernahmeaufforderung. Nach der Aktivierung des autonomen Fahrmodus leuchtet der Lenkradkranz beispielsweise grün. Bei Übergang in den manuellen Fahrbetrieb leuchtet der Lenkradkranz zunächst weiterhin grün und blinkt dabei. Wenn danach keine Übernahme erfolgt, leuchtet der Lenkradkranz rot. Nach der Fahrerübernahme leuchtet der Lenkradkranz blau.

Aus der Druckschrift DE 10 2007 052 258 A1 ist es bekannt, den Zustand der Querführung über einen Leuchtring am Lenkrad zu signalisieren. Bei deaktivierter Querführung leuchtet der Leuchtring rot. Im Bereitschaftszustand leuchtet der Leuchtring beispielsweise in gelber Farbe. Beim Übergang vom deaktivierten Zustand der Querführung in den aktivierten Zustand wechselt der Leuchtring auf die Farbe Grün. Bei einer Übernahmeaufforderung blinkt der Leuchtring in roter Farbe.

Zudem beschreibt die Druckschrift DE10 2015 016 056 A1 ein Verfahren zur Anzeige einer Information mittels zumindest eines in ein Lenkrad eines Fahrzeuges integrierten Beleuchtungselementes. Dabei ist vorgesehen, dass als Information ein Status eines Fahrsystems mittels des zumindest einen Beleuchtungselementes angezeigt wird.

Es ist Aufgabe der Erfindung, ein automatisiertes Fahrsystem mit einer intuitiven Fahreranzeige zur Anzeige von die Automatisierung betreffender Informationen anzugeben, welches verschiedene Fahrmodi der Automatisierung unterstützt. Es ist ferner Aufgabe der Erfindung, ein entsprechendes Anzeigeverfahren für ein Fahrsystem zum automatisierten Fahren anzugeben.

Ein erster Aspekt der Erfindung betrifft ein Fahrsystem zum automatisierten Fahren für ein Kraftfahrzeug, wobei das Fahrsystem eine Lenkradanzeige aufweist.

Das Fahrsystem kann zumindest in einem ersten automatisierten Fahrmodus mit automatisierter Längs- und/oder Querführung und in einem davon verschiedenen zweiten automatisierten Fahrmodus mit automatisierter Längs- und/oder Querführung betrieben werden. Vorzugsweise handelt es sich um zwei verschiedene Fahrmodi mit automatisierter Längs- und Querführung. Die beiden Fahrmodi unterscheiden sich beispielsweise hinsichtlich ihres Automatisierungsgrads. Die beiden Fahrmodi entsprechen beispielsweise einem teilautomatisierten Fahrmodus, der das zeitweise oder dauerhafte wegnehmen der Hände vom Lenkrad erlaubt, und einem hochautomatisierten Fahrmodus, der die dauerhafte motorische und kognitive Abwendung vom Fahrgeschehen und den entsprechenden Bedienelementen erlaubt.

Der erste Fahrmodus und der zweite Fahrmodus entsprechen beispielsweise zwei verschiedenen, vom Fahrsystem unterstützten Fahrmodi aus einer nachfolgend beschriebenen Gruppe von drei Fahrmodi. Die Gruppe umfasst:
- einen teilautomatisierten Hands-on-Fahrmodus mit automatisierter Längs- und Querführung, bei dem der Fahrer sowohl das System dauerhaft überwachen muss als auch ein oder zwei Hände am Lenkrad halten muss,
- einen teilautomatisierten Hands-off-Fahrmodus mit automatisierter Längs- und Querführung, bei dem der Fahrer das System dauerhaft überwachen muss, jedoch keine Hand am Lenkrad halten muss, und
- einen hoch- oder vollautomatisierten Hands-off-Fahrmodus mit automatisierter Längs- und Querführung, bei dem der Fahrer das System nicht dauerhaft überwachen muss und auch keine Hand am Lenkrad halten muss.

In diesem Fall kann das Fahrsystem lediglich nur zwei verschiedene oder gar sämtliche der drei verschiedenen Fahrmodi der vorstehend beschriebenen Gruppe von Fahrmodi unterstützen.

Beispielsweise weist das Fahrsystem als ersten Fahrmodus einen teilautomatisierten Hands-off-Fahrmodus oder einen hoch- oder vollautomatisierte Hands-off-Fahrmodus und als zweiten Fahrmodus einen teilautomatisierten Hands-on-Fahrmodus auf.

Bei einem anderen Beispiel weist das Fahrsystem als ersten Fahrmodus einen hoch- oder vollautomatisierten Hands-off-Fahrmodus und als zweiten Fahrmodus einen teilautomatisierten Hands-on-Fahrmodus auf.

Es kann auch sein, dass es sich bei dem ersten oder zweiten Fahrmodus um einen assistierten Fahrmodus handelt, bei dem das System lediglich die Längsführung des Fahrzeugs übernimmt. Es wäre auch denkbar, dass es sich bei dem ersten oder zweiten Fahrmodus um einen Fahrmodus handelt, bei dem das System die Querführung des Fahrzeugs übernimmt, wohingegen der Fahrer die Längsführung des Fahrzeugs selbst steuert.

Das Fahrsystem weist eine Lenkradanzeige mit Leuchtmitteln zum Leuchten des Lenkrads auf, die in verschiedenen, für den Fahrer unterscheidbaren Leuchtzuständen betreibbar ist. Leuchtzustände können sich beispielsweise unterscheiden hinsichtlich einer oder mehrerer der folgenden Aspekte:
- ihrer Leuchtfarbe (z. B. grün, blau, rot),
- ihrer Leuchtfläche (z. B. ein vollständig leuchtender Leuchtring im Lenkradkranz im Vergleich zu nur in Teilbereichen des Leuchtrings leuchtenden Bereichen, z. B. nur links und rechts am Lenkradkranz; variable Leuchtflächen wären auch bei einer Lenkradanzeige in den Lenkradspeichen oder im Lenkrad-Topf denkbar),
- Dauerleuchten oder blinkendes Leuchten,
- ihrer Leuchtintensität (z. B. helles Leuchten und geringfügiges Leuchten) und
- ihrem Leuchtmuster (z. B. jede LED eines Leuchtrings leuchtet im Unterschied zu einem Leuchtring, bei dem entlang des Umfangs nur jede zweite LED leuchtet).

Die Leuchtmittel Lenkradanzeige sind beispielsweise in den Lenkradspeichen oder im Lenkrad-Topf integriert, um die Lenkradspeichen bzw. den Lenkrad-Topf zu beleuchten. Vorzugsweise handelt es sich aber um Leuchtmittel zum Leuchten des Lenkradkranzes, die typischerweise im Lenkradkranz integriert sind. Selbstverständlich könnte der Lenkradkranz auch durch außerhalb des Lenkradkranzes angeordnete Leuchtmittel beleuchtet werden und so zum Leuchten gebracht werden.

Das Fahrsystem gibt vor, welchen Leuchtzustand der verschiedenen Leuchtzustände die Lenkradanzeige aufweisen soll. Das Fahrsystem gibt vor, dass bei Betrieb des Fahrsystems in dem ersten Fahrmodus die Lenkradanzeige in einem ersten Leuchtzustand leuchtet. Bei Betrieb des Fahrsystems in dem zweiten Fahrmodus leuchtet die Lenkradanzeige in einem von dem ersten Leuchtzustand für den Fahrer unterscheidbaren zweiten Leuchtzustand. Dabei kann der erste Leuchtzustand und der zweite Leuchtzustand während des Betriebs des Fahrsystems in dem ersten Fahrmodus bzw. zweiten Fahrmodus dauerhaft beibehalten werden. Alternativ wäre es auch denkbar, dass der erste und/oder zweite Leuchtzustand nur für eine begrenzte Zeitdauer nach Umschalten in den ersten Fahrmodus bzw. zweiten Fahrmodus aufrechterhalten wird und danach beispielsweise die Lenkradanzeige aus ist.

Durch die verschiedenen Leuchtzustände der Lenkradanzeige können der erste und der zweite Fahrmodus bei der jeweiligen Aktivierung vom Fahrer sicher unterschieden werden, und zwar an einer Stelle im Fahrzeug (d .h. am Lenkrad), an der der Fahrer primär die Automatisierung des Fahrbetriebs wahrnimmt. Diese Art der Signalisierung an den Fahrer ist besonders intuitiv, wenn der Fahrer auch die Aktivierung eines automatisierten Fahrmodus am Lenkrad vornimmt, beispielsweise durch mehrere Lenkradtasten oder ein Schiebe-Bedienelement am Lenkrad.

Bei einem ersten Beispiel entspricht der erste Fahrmodus einem teilautomatisierten Hands-off-Fahrmodus oder einem hoch- oder vollautomatisierten Hands-off-Fahrmodus, wohingegen der zweite Fahrmodus einem teilautomatisierten Hands-on-Fahrmodus entspricht.

In diesem ersten Beispiel ist es von Vorteil, wenn im ersten Leuchtzustand bei aktivem ersten Fahrmodi (teilautomatisierter Hands-off-Fahrmodus oder hoch- oder vollautomatisierter Hands-off-Fahrmodus) der Lenkradkranz als geschlossener Lichtring leuchtet, wohingegen bei aktivem zweiten Fahrmodus (teilautomatisierten Hands-on-Fahrmodus) im zweiten Leuchtzustand der Lenkradkranz lediglich an einem linken Bogenbereich und an einem rechten Bogenbereich des Lenkradkranzes leuchtet, um zu signalisieren, dass der Fahrer seine Hände an diese Bogenbereiche des Lenkradkranzes halten soll. Dies kann unabhängig davon erfolgen, ob der Fahrer bereits seine Hände am Lenkradkranz hat oder nicht. Es leuchten also ein linker und ein rechter Bereich der Lenkradanzeige, an die der Fahrer die Hände legen muss. Es kann auch vorgesehen sein, dass im ersten Fahrmodus der Lenkradkranz nicht als geschlossener Lichtring leuchtet, sondern lediglich in (im Vergleich zum zweiten Fahrmodus) größeren Bogenbereichen des Lenkradkranzes, die den linken und rechten Bogenbereich umfassen und deutlich darüber hinausgehen. Beispielsweise leuchtet im ersten Fahrmodus der Lenkradkranz bis auf einen ausgesparten oberen und/oder unteren Bogenbereich des Lenkradkranzes vollständig. Es wäre auch denkbar, dass links und rechts ein gewisser Bogenbereich ausgespart wird, beispielsweise im Bereich der Lenkradspeichen.

Der Fahrer hält seine Hände intuitiv an die beleuchten Teilbereiche links und rechts am Lenkradkranz, wenn das Fahrzeug im teilautomatisierten Hands-on-Fahrmodus betrieben wird und nur ein linken und ein rechter Leuchtbereich der Lenkradanzeige leuchten.

Grundsätzlich wäre es aber auch denkbar, dass der erste Leuchtzustand einem beliebigen der drei Fahrzustände und der zweite Leuchtzustand mit den beiden Bogenbereichen einem anderen der drei Fahrzustände zugeordnet ist.

Sofern es sich bei den zwei zu unterscheidenden Fahrmodi um den teilautomatisierten Hands-off-Fahrmodus und den teilautomatisierten Hands-on-Fahrmodus handelt, kann zusätzlich zu der Änderung der Anzeigenfläche noch ein Farbwechsel zwischen den beiden Fahrmodi vorgesehen sein (beispielsweise grün bei teilautomatisiertem Hands-off-Fahrmodus und gelb bei teilautomatisiertem Hands-on-Fahrmodus).

Im Lenkradkranz kann hierfür beispielsweise als Leuchtmittel ein segmentierter Leuchtring integriert sein, der wahlweise in allen Segmenten oder nur in einer Teilmenge der Segmente in einem rechten und linken Bereich des Lenkradkranzes leuchtet. Vorzugsweise kann auch die Leuchtfarbe des Leuchtrings verändert werden.

Sofern es sich bei dem ersten Fahrmodus um den teilautomatisierten Hands-off-Fahrmodus und bei dem zweiten Fahrmodus um den teilautomatisierten Hands-on-Fahrmodus handelt, schaltet das Fahrsystem vorzugsweise selbstständig vom teilautomatisierten Hands-off-Fahrmodus in den teilautomatisierten Hands-on-Fahrmodus um (beispielsweise bei Erkennen einer kritischen Fahrsituation, z. B. im Fall eines Hindernisses). Es kann auch sein, dass das Fahrsystem auch selbstständig wieder vom Hands-on-Fahrmodus in den Hand-off-Fahrmodus umschalten kann (beispielsweise nach der kritischen Fahrsituation).

Vorzugsweise ist ein Bedienelement vorgesehen, mittels dem der Fahrer einen teilautomatisierten Fahrbetrieb auswählt; die Auswahl des Hands-off-Fahrmodus oder Hands-on-Fahrmodus übernimmt vorzugsweise aber das Fahrzeug.

Bei einem weiteren Beispiel der Erfindung ist der erste Fahrmodus der hoch- oder vollautomatisierte Hands-off-Fahrmodus, wohingegen der zweite Fahrmodus der teilautomatisierte Hands-off-Fahrmodus oder der teilautomatisierte Hands-on-Fahrmodus ist.

In diesem Fall ist es von Vorteil, wenn bei aktivem hoch- oder vollautomatisierten Fahrmodus die Lenkradanzeige in dem ersten Leuchtzustand mit einer ersten Leuchtfarbe leuchtet (z. B. in blau), wohingegen bei aktivem teilautomatisiertem Fahrmodus die Leuchtanzeige im zweiten Leuchtzustand in einer zweiten, für den Fahrer von der ersten Leuchtfarbe unterscheidbaren zweiten Leuchtfarbe leuchtet (z. B. in grün). Der Leuchtfarbe im zweiten Leuchtzustand hängt davon ab, ob der Fahrer die Hände aktuell am Lenkrad hat oder nicht (beispielsweise grün bei Berührung des Lenkrads und gelb bei Nichtberührung des Lenkrads).

Hierdurch kann der Fahrer leicht differenzieren, ob ein hoch- oder vollautomatisierter Fahrmodus oder nur ein teilautomatisierter Fahrmodus vorliegt. Diese Differenzierung ist insbesondere vor dem Hintergrund wichtig, dass im hoch- oder vollautomatisierten Fahrmodus der Fahrer den automatisierten Fahrbetrieb nicht dauerhaft überwachen muss, wohingegen im teilautomatisierten Fahrbetrieb diese dauerhafte Überwachung des automatisierten Fahrbetriebs gewährleistet sein muss. Durch die unterschiedlichen Farben wird der Fahrer auf das unterschiedliche Anforderungsprofil der fahrerseitigen Überwachung hingewiesen. Zusätzlich zu der Unterscheidung über die Farbe kann vorgesehen sein, dass im zweiten Leuchtzustand (teilautomatisierter Fahrmodus) der Lenkradkranz lediglich an einem linken Bogenbereich und an einem rechten Bogenbereich des Lenkradkranzes leuchtet, wohingegen m ersten Leuchtzustand (hochautomatisierter oder vollautomatisierter Fahrmodus) der Lenkradkranz als geschlossener Lichtring oder zumindest in (im Vergleich zu dem linken und rechten Bogenbereich) größeren Bogenbereichen des Lenkradkranzes, die den linken und rechten Bogenbereich umfassen und darüber hinausgehen, leuchtet.

Unabhängig von der vorstehend beschriebenen Signalisierung des Fahrmodus wird die Lenkradanzeige für eine Hands-on-Aufforderung verwendet.

Ein vom Fahrersystem unterstützter Fahrmodus ist ein teilautomatisierter Hands-on-Fahrmodus; dieser kann beispielsweise dem zweiten Fahrmodus entsprechen.

Das Fahrsystem umfasst für die Implementierung der Hands-on-Aufforderung eine Hands-on-Detektionseinrichtung zur Erkennung des Hand-Anliegens an das Lenkrad, insbesondere an den Lenkradkranz. Beispielsweise kann hierzu eine kapazitive oder resistive Hands-on-Sensorik im Lenkradkranz integriert sein, die ein Berühren des Lenkradkranzes feststellt. Die Hands-on-Sensorik kann den gesamten Umfang oder nur einen Teil des Umfangs des Lenkradkranzes abdecken. Zum Erkennen des Hand-Anliegens reicht vorzugsweise bereits das Berühren des Lenkradkranzes mit nur einer einzigen Hand an einer mit der Sensorik erfassbaren Stelle.

Das Fahrsystem ist erfindungsgemäß eingerichtet, bei Betrieb des Fahrzeugs im teilautomatisierten Hands-on-Fahrmodus eine Hands-on-Aufforderung zur Aufforderung, die Hände an das Lenkrad zu nehmen, an den Fahrer auszugeben, wenn die Hands-on-Detektionseinrichtung kein Hand-Anliegen an das Lenkrad erkennt. Es wird darauf hingewiesen, dass eine Hands-on-Aufforderung im teilautomatisierten Hands-on-Fahrmodus von einer Übernahme-Aufforderung im hochautomatisierten Fahrmodus zu unterscheiden ist: Bei einer Hands-on-Aufforderung wird der Fahrer aufgefordert, die Hände an das Lenkrad zu nehmen, ohne dass der Fahrer tatsächlich lenken muss (das macht das Fahrsystem für den Fahrer). Der Fahrer kann dann aber schnell eingreifen, sofern es die Situation erfordert. Bei einer Übernahme-Aufforderung wird der Fahrer aufgefordert, nicht nur die Hände an das Lenkrad zu nehmen, sondern die Lenkung des Fahrzeugs und im Allgemeinen auch die Längsführung des Fahrzeugs zu übernehmen.

Die vorstehend beschriebene Hands-on-Aufforderung umfasst einen Wechsel des Leuchtzustands der Lenkradanzeige von einem Leuchtzustand (beispielsweise dem vorstehend zweiten Leuchtzustand) in einen für den Fahrer von diesem Leuchtzustand unterscheidbaren anderen Leuchtzustand. Durch Änderung des Leuchtzustands der Lenkradanzeige kann der Fahrer intuitiv dazu aufgefordert werden, die Hände an das Lenkrad zu nehmen.

Der Wechsel des Leuchtzustands äußert sich erfindungsgemäß in einem Wechsel der Leuchtfarbe, beispielsweise ein Wechsel hin zu einer Signalfarbe (z. B. von grün oder blau auf rot). Beispielsweise werden - wie vorstehend beschrieben - im teilautomatisieren Hands-on-Fahrmodus nur ein linker und ein rechter Bereich des Lenkradkranzes beleuchtet, an die der Fahrer die Hände halten soll. Im Rahmen der Hands-on-Aufforderung ändert sich vorzugsweise die Farbe von grün oder blau auf rot.

Vorzugsweise geht im Rahmen des Wechsels des Leuchtzustands der eine Leuchtzustand kontinuierlich in den anderen Leuchtzustand über. Beispielsweise geht der eine Leuchtzustand innerhalb einer bestimmten Zeitspanne (z. B. eine Zeitspanne im Bereich von 3 s bis 12 s, z. B. 6 s) nach Feststellen, dass die Hände nicht am Lenkrad anliegen, der eine Leuchtzustand in den anderen Leuchtzustand über.

Der kontinuierliche Übergang kann beispielsweise so ausgestaltet sein, dass im Rahmen des Wechsels des Leuchtzustands der oder die zunächst in einer bestimmten Leuchtfarbe leuchtenden Bereiche der Lenkradanzeige mit einer anderen Leuchtfarbe kontinuierlich aufgefüllt werden (z. B. nach Art einer Sanduhr).

Unabhängig von der vorstehend beschriebenen Signalisierung des Fahrmodus wird die Lenkradanzeige zur Anzeige verwendet, ob der Fahrer im teilautomatisierten Hands-on-Fahrmodus die Hände am Lenkrad hat oder nicht.

Erfindungsgemäß umfasst das Fahrsystem eine Hands-on-Detektionseinrichtung zur Erkennung des Hand-Anliegens an das Lenkrad, insbesondere an den Lenkradkranz. Das Fahrsystem ist eingerichtet, bei Betrieb des Fahrzeugs im teilautomatisierten Hands-on-Fahrmodus und festgestelltem Hand-Anliegen an das Lenkrad, insbesondere an den Lenkradkranz, die Lenkradanzeige in einem bestimmten Leuchtzustand leuchten zu lassen, und ohne Hand-Anliegen an das Lenkrad, insbesondere an den Lenkradkranz, die Lenkradanzeige in einem für den Fahrer von dem bestimmten Leuchtzustand unterscheidbaren anderen Leuchtzustand leuchten zu lassen. Erfindungsgemäß unterscheiden sich die beiden Leuchtzustände in ihrer Leuchtfarbe. Beispielsweise leuchtet die Lenkradanzeige im teilautomatisierten Hands-on-Fahrmodus beispielsweise in einer ersten Farbe (z. B. grün), wenn mindestens eine Hand den Lenkradkranz an einer beliebigen Stelle greift, wohingegen die Lenkradanzeige in einer zweiten Farbe (z. B. orange) leuchtet, wenn keine Hand den Lenkradkranz an einer beliebigen Stelle greift. Vorzugsweise leuchtet in beiden Fällen nicht der gesamte Lenkradkranz, sondern lediglich an einem linken Bogenbereich und an einem rechten Bogenbereich des Lenkradkranzes, um zu signalisieren, dass der Fahrer seine Hände an diese Bogenbereiche des Lenkradkranzes halten soll. Auch hier kann optional eine Warneskalation vorgesehen sein. Dabei kann sich die Anzeige über die Zeit farblich verändern, wenn der Fahrer nicht innerhalb eines definierten Zeitraumes (z.B. 8 Sekunden) mit mindestens eine Hand den Lenkradkranz an einer beliebigen Stelle greift. Beispielsweise kann die zweite Farbe (z. B. orange) kontinuierlich in eine dritte Farbe übergehen, indem beispielsweise die leuchtenden Anzeigenbereiche mit der dritten Leuchtfarbe kontinuierlich aufgefüllt werden (z. B. nach Art einer Sanduhr).

Es kann vorgesehen sein, dass ein Bedienelement zur Aktivierung eines Fahrmodus in der gleichen Farbe wie die Lenkradanzeige leuchtet: Beispielsweise ist der erste Fahrmodus der hoch- oder vollautomatisierte Hands-off-Fahrmodus, wohingegen der zweite Fahrmodus der teilautomatisierte Hands-on-Fahrmodus ist. Das Fahrerassistenzsystem umfasst ein beleuchtbares, insbesondere am Lenkrad angeordnetes Bedienelement (z. B. eine Taste) zur fahrerseitigen Auswahl des ersten Fahrmodus und ein beleuchtbares, insbesondere am Lenkrad angeordnetes Bedienelement (z. B. eine Taste) zur fahrerseitigen Auswahl des zweiten Fahrmodus. Das Fahrsystem ist dann vorzugsweise eingerichtet, im ersten Fahrmodus sowohl die Lenkradanzeige als auch das dem ersten Fahrmodus zugeordnete Bedienelement in einer gemeinsamen Leuchtfarbe leuchten zu lassen, und im zweiten Fahrmodus sowohl die Lenkradanzeige als auch das dem zweiten Fahrmodus zugeordnete Bedienelement in einer anderen, für den Fahrer unterscheidbaren gemeinsamen Leuchtfarbe leuchten zu lassen. Beispielsweise leuchten im hoch- oder vollautomatisierten Hands-off-Fahrmodus sowohl das Bedienelement für den hoch- oder vollautomatisierten Hands-on-Fahrmodus als auch die Lenkradanzeige blau, wohingegen im teilautomatisierten Hands-on-Fahrmodus sowohl das Bedienelement für den teilautomatisierten Hands-on-Fahrmodus als auch die Lenkradanzeige grün leuchten. Sofern im teilautomatisierten Hands-on-Fahrmodus sich die Farbe der Lenkradanzeige ändert (z. B. auf gelb oder rot), ändert sich vorzugsweise auch die Farbe des Bedienelements zur Anwahl des teilautomatisierten Hands-on-Fahrmodus in die gleiche Farbe. Ein weiterer Aspekt der Anmeldung betrifft ein Anzeigeverfahren für ein Fahrsystem zum automatisierten Fahren eines Kraftfahrzeugs. Das Fahrsystem ist zumindest in einem ersten automatisierten Fahrmodus mit automatisierter Längs- und/oder Querführung und in einem davon verschiedenen zweiten automatisierten Fahrmodus mit automatisierter Längs- und/oder Querführung betreibbar, wobei der erste und der zweite Fahrmodus vorzugsweise zwei verschiedenen Fahrmodi aus der bereits vorstehend diskutierten Gruppe von drei Fahrmodi entsprechen. Das Fahrsystem weist eine Lenkradanzeige mit Leuchtmitteln zum Leuchten des Lenkrads auf, wobei die Lenkradanzeige in verschiedenen, für den Fahrer unterscheidbaren Leuchtzuständen betreibbar ist. Gemäß dem Anzeigeverfahren leuchtet bei Betrieb des Fahrsystems in dem ersten Fahrmodus die Lenkradanzeige in einem ersten Leuchtzustand, wohingegen bei Betrieb des Fahrsystems in dem zweiten Fahrmodus die Lenkradanzeige in einem von dem ersten Leuchtzustand für den Fahrer unterscheidbaren zweiten Leuchtzustand leuchtet.

Die vorstehenden Ausführungen zum erfindungsgemäßen Fahrsystem gelten in entsprechender Weise auch für das Anzeigeverfahren. An dieser Stelle und in den Patentansprüchen nicht explizit beschriebene vorteilhafte Ausführungsbeispiele des erfindungsgemäßen Anzeigeverfahrens entsprechen den vorstehend beschriebenen oder in den Patentansprüchen beschriebenen vorteilhaften Ausführungsbeispielen des erfindungsgemäßen Fahrsystems.

Die Erfindung wird nachfolgend anhand eines Ausführungsbeispiels unter Zuhilfenahme der beigefügten Zeichnungen beschrieben. In diesen zeigen:
- Fig. 1: ein beispielhaftes Lenkrad mit einer beispielhaften Lenkradanzeige und beispielhaften Bedienelementen für ein erfindungsgemäßes Fahrsystem zum automatisierten Fahren;
- Fig. 2: beispielhafte, unterschiedliche Leuchtzustände einer Lenkradanzeige für verschieden Fahrmodi eines beispielhaften Fahrsystem zum automatisierten Fahren; und
- Fig. 3: eine beispielhafte Implementierung der Signalisierung einer Hands-on-Aufforderung im teilautomatisierten Hands-on-Fahrmodus.

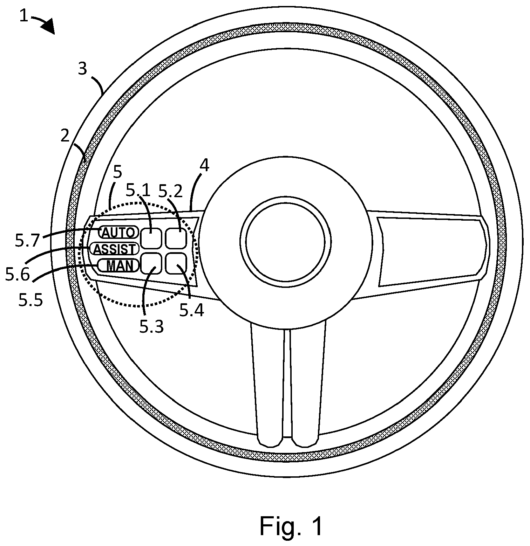

In Fig. 1 ist ein beispielhaftes Lenkrad 1 mit einer beispielhaften in einem Lenkradkranz 3 integrierten Lenkradanzeige 2 und mit beispielhaften in eine Lenkradspeiche 4 integrierten kombinierten Anzeige- und Bedienelementen 5 für ein erfindungsgemäßes Fahrsystem zum automatisierten Fahren dargestellt. Die Lenkradanzeige 2 ist in Form eines segmentierten Leuchtrings mit einer Vielzahl von Leuchtsegmenten realisiert, der in Abhängigkeit der Ansteuerung wahlweise als geschlossener Lichtring oder nur in bestimmten Bogenbereichen des Leuchtrings zum Leuchten gebracht werden kann. Hierbei kann der Leuchtring in Abhängigkeit der systemseitigen Ansteuerung in unterschiedlichen Leuchtfarben leuchten. Zur Implementierung der einzelnen Segmente des Leuchtrings können beispielsweise Leuchtmittel in Form von LEDs (LED - light emitting diode) vorgesehen werden. Ein Segment des Leuchtrings kann dabei einer Gruppe von LEDs oder einer einzelnen LED entsprechen.

Ferner ist eine Hands-on-Detektionseinrichtung mit einer im Lenkradkranz integrierten Sensorik vorgesehen, die feststellen kann, ob der Fahrer zumindest eine Hand am Lenkrad in denjenigem Bogenbereich des Lenkradkranzes 3 hält, der durch Sensorik abgedeckt ist. Hierbei kann durch die Sensorik der gesamte Lenkradkranz 3 abgedeckt sein oder es können ein oder mehrere Bereiche des Lenkradkranzes 3 hierbei ausgespart sein (z. B. der Bereich unten und/oder oben am Lenkradkranz 3).

Die kombinierten Anzeige- und Bedienelemente 5 umfassen eine Mehrzahl von Bedienfeldern 5.1.-5.7, wobei ein einzelnes Bedienfeld durch Drücken oder Berühren betätigt wird. Die kombinierten Anzeige- und Bedienelemente 5.1 - 5.4 sind vorzugsweise in ihrer Funktion und Anzeige von dem jeweils aktiven Fahrmodus abhängig. Diese Bedienfelder 5.1-5.4 können je nach Fahrmodus mit einer von dem Fahrmodus abhängigen variablen symbolischen oder textuellen Beschriftung belegt werden.

Die kombinierten Anzeige- und Bedienelemente 5.5, 5.6, 5.7 mit der beispielhaften Beschriftung "MAN", "ASSIST" und "AUTO" dienen jeweils zur fahrerseitigen Auswahl eines jeweilig zugeordneten Fahrmodus und sind beispielsweise farblich hinterleuchtet, wenn der dem Bedienelement zugeordnete Fahrmodus aktiv ist, um dem Fahrer den aktiven Fahrmodus zu signalisieren.

Das Fahrsystem unterstützt eine Vielzahl von Fahrmodi:
1. Manueller Fahrmodus (manuelles Fahren): Im manuellen Fahrmodus erfolgen sowohl die Längs- als auch die Querführung vom Fahrer manuell. Durch Betätigen des Bedienelementes 5.5 ("MAN") kann fahrerseits der manuelle Fahrmodus ausgewählt werden. Bei aktivem manuellen Fahrmodus ist das Bedienelement 5.5 ("MAN") farbig hinterleuchtet, um den aktiven Fahrmodus anzuzeigen.
2. Assistierter Fahrmodus (assistiertes Fahren): Im assistieren Fahrmodus führt das Fahrsystem die Längsführung durch. Die Funktion des Fahrsystem in diesem Fahrmodus entspricht vorzugsweise der Funktion eines ACC-Systems (ACC - adaptive cruise control; Abstandstempomat). Die Querführung wird vom Fahrer übernommen. Der Fahrer muss dauerhaft das Fahrsystem überwachen. Durch Betätigen des Bedienelementes 5.6 ("ASSIST") kann der Fahrer den assistierten Fahrmodus auswählen. Bei aktivem assistierten Fahrmodus ist das Bedienelement 5.6 ("ASSIST") farbig hinterleuchtet, um den aktiven Fahrmodus anzuzeigen. Durch die Bedienelemente 5.1 und 5.3 kann der Fahrer einen Soll-Abstand zum Vorderfahrzeug erhöhen bzw. erniedrigen. Hierzu sind diese in diesem Fahrmodus mit entsprechender Anzeigeinformation versehen.
3. Teilautomatisierter Hands-on-Fahrmodus (teilautomatisiertes Fahren, kurz "TAF-HON"): Im teilautomatisierten Hands-on-Fahrmodus übernimmt das Fahrsystem sowohl die Längs- als auch Querführung. In diesem Fahrmodus muss der Fahrer sowohl das System dauerhaft überwachen als auch zumindest eine Hand am Lenkrad halten. Sofern der assistierte Fahrmodus durch Betätigen des Bedienelements 5.6 ("ASSIST") ausgewählt wurde, kann ein teilautomatisierter Fahrmodus durch Betätigung des Bedienelements 5.4 ausgewählt werden. Das Fahrsystem legt selbstständig fest, ob ein teilautomatisierter Hands-off-Fahrmodus oder ein teilautomatisierter Hands-on-Fahrmodus vorliegt.
4. Teilautomatisierter Hands-off-Fahrmodus (teilautomatisiertes Fahren, kurz "TAF-HON"): Dieser unterscheidet sich von dem teilautomatisierten Hands-on-Fahrmodus darin, dass der Fahrer keine Hand am Lenkrad halten muss. Vorzugsweise ist das System so ausgestaltet, dass der Fahrer im teilautomatisierten Hands-off-Fahrmodus die Hände am Lenkrad halten kann, wenn er dies wünscht (ohne dass er dies aber muss).
5. Hochautomatisierter Hands-off-Fahrmodus (Hochautomatisiertes Fahren, kurz HAF): Im hochautomatisierten Hands-off-Fahrmodus übernimmt das Fahrsystem die Längs- und Querführung (beispielsweise beim Fahrer auf der Autobahn). Der Fahrer muss das System nicht dauerhaft überwachen und auch keine Hand am Lenkrad halten. Der Fahrer muss aber in einer gewissen Zeit in der Lage sein, die Fahrzeugführung zu übernehmen, nachdem das Fahrzeug den Fahrer durch eine Übernahmeaufforderung hierzu aufgefordert hat. Durch Betätigen des Bedienelementes 5.7 ("AUTO") kann der Fahrer den hochautomatisierten Fahrmodus auswählen. Bei aktivem assistierten Fahrmodus ist das Bedienelement 5.7 ("AUTO") farbig hinterleuchtet, um den aktiven Fahrmodus anzuzeigen.

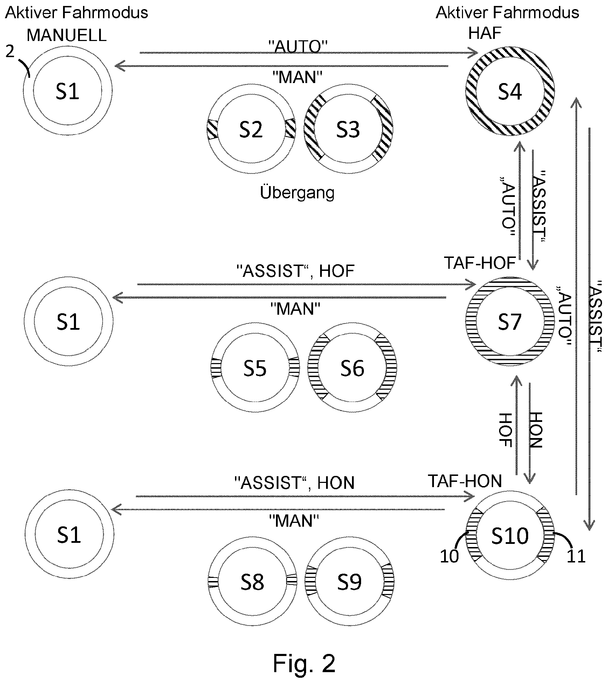

In Fig. 2 sind verschiedene Zustände S1-S10 der Lenkradanzeige 2 schematisch in Abhängigkeit vom Fahrmodus sowie die Zustandsübergänge dargestellt. Hierbei signalisieren nicht schraffierte dargestellte Bereiche der Lenkradanzeige, dass diese Bereiche der Lenkradanzeige nicht leuchten. Sofern die gesamte Lenkradanzeige 2 nicht schraffiert ist, leuchtet die gesamte Anzeige 2 nicht. Ein diagonal schraffiert dargestellter Bereich der Lenkradanzeige 2 entspricht einem Bereich, der in einer ersten Leuchtfarbe leuchtet, z. B. blau. Sofern die gesamte Lenkradanzeige 2 diagonal schraffiert dargestellt ist, leuchtet die gesamte Anzeige 2 in der ersten Leuchtfarbe, z. B. blau. Ein horizontal schraffiert dargestellter Bereich der Lenkradanzeige 2 entspricht einem Bereich, der in einer zweiten Leuchtfarbe leuchtet, z. B. grün. Sofern die gesamte Lenkradanzeige 2 horizontal schraffiert dargestellt ist, leuchtet die gesamte Anzeige 2 in der zweiten Leuchtfarbe, z. B. grün.

Wenn das Fahrzeug im manuellen Fahrmodus ist, befindet sich die Lenkradanzeige 2 im Zustand S1 und leuchtet nicht. In Reaktion auf eine Betätigung des Bedienelements 5.7 ("AUTO") wird das Fahrzeug vom manuellen Fahrmodus in den hochautomatisierten Hands-off-Fahrmodus Fahrmodus HAF umgeschaltet. Sofern der Fahrmodus HAF aktiv ist und die Quer- und Längsführung des Fahrzeugs übernommen hat, befindet sich die Lenkradanzeige 2 im Zustand S4, in dem die Lenkradanzeige 2 als geschlossener Leuchtring in der ersten Leuchtfarbe (z. B. blau) leuchtet.

Der Übergang in den Fahrmodus HAF kann mit einer dynamischen Animation geschehen. Nach Betätigen des Bedienelements 5.7 ("AUTO") im manuellen Fahrmodus folgen zunächst noch die Zwischenzustände S2, S3 und ggf. weitere nicht dargestellte Zwischenzustände, in denen die Beleuchtung der Lenkradanzeige in der ersten Leuchtfarbe (z. B. blau) ausgehend von einem linken und rechten Bereich der Lenkradanzeige 2 sukzessive zunimmt, bis der gesamte Leuchtring im Zustand S4 leuchtet. Im Zustand S4 leuchtet das Bedienelement 5.7 ("AUTO") in der gleichen Leuchtfarbe wie die Lenkradanzeige 2.

Sofern sich das Fahrzeug im manuellen Fahrmodus befindet, kann in Reaktion auf eine Betätigung des Bedienelements 5.7 ("AUTO") das Fahrzeug vom manuellen Fahrmodus in einen teilautomatisierten Fahrmodus umgeschaltet werden. Es kann vorgesehen sein, dass in Reaktion auf die Betätigung des Bedienelements 5.7 ("AUTO") das Fahrzeug zunächst in den assistierten Fahrmodus umschaltet und das Fahrzeug erst nach Betätigung eines weiteren Bedienelements (z. B. des Bedienelements 5.4) in einen teilautomatisierten Fahrmodus umschaltet. Das Bedienelement 5.4 dient in diesem Fall zur Aktivierung einer automatisierten Querführung. Es sind zumindest die verschiedenen Varianten denkbar:
1. Das System startet bei Betätigen des Bedienelements 5.6 ("ASSIST") immer mit automatisierter Querführung auf (d.h. in einem teilautomatisierten Fahrmodus), zum Deaktivieren der Querführung (und Umschalten in den assistierten Fahrmodus) muss beispielsweise das Bedienelement 5.4 gedrückt werden.
2. Das System startet bei Betätigen des Bedienelements 5.6 ("ASSIST") immer ohne automatisierte Querführung (d. h. im assistieren Fahrmodus) auf, zum Aktiveren der Querführung muss ein weiteres Bedienelement (z. B. das Bedienelement 5.4) betätigt werden.
3. Das System merkt sich den zuletzt eingestellten Querführungsstatus (automatisierte Querführung an oder aus) und startet nach Betätigen des Bedienelements 5.6 ("ASSIST") wieder in diesem Status auf.

Sofern ein teilautomatisierter Fahrmodus vom Fahrer durch eine oder mehrere Bedienhandlungen gewählt wurde, entscheidet das Fahrzeug beispielsweise in Abhängigkeit der aktuellen Umgebungssituation selbstständig, ob das Fahrzeug im teilautomatisierten Hands-off-Fahrmodus TAF-HOF oder im teilautomatisierten Hands-on-Fahrmodus TAF-HON betrieben wird. Die systemseitige Entscheidung für den teilautomatisierten Hands-off-Fahrmodus TAF-HOF ist in Fig. 2 mit "HOF" bezeichnet, während die systemseitige Entscheidung für den teilautomatisierten Hands-on-Fahrmodus TAF-HON in Fig. 2 mit "HON" bezeichnet ist.

Sofern der Fahrmodus TAF-HOF aktiviert wurde und die automatisierte Quer- und Längsführung des Fahrzeugs übernommen wurde, befindet sich die Lenkradanzeige 2 im Zustand S7, in dem die Lenkradanzeige 2 als geschlossener Leuchtring in der zweiten Leuchtfarbe (z. B. grün) leuchtet. Der Übergang in den Fahrmodus TAF-HOF kann mit einer dynamischen Animation geschehen. Nach Betätigen des Bedienelements 5.7 ("ASSIST") folgen die Zwischenzustände S5, S6 und ggf. weitere nicht dargestellte Zwischenzustände, in denen die Beleuchtung der Lenkradanzeige 2 in der zweiten Leuchtfarbe (z. B. grün) ausgehend von einem linken und rechten Bereich der Lenkradanzeige 2 sukzessive zunimmt, bis der gesamte Leuchtring im Zustand S7 leuchtet. Im Zustand S7 leuchtet das Bedienelement 5.6 ("ASSIST") in der gleichen Leuchtfarbe wie die Lenkradanzeige 2. Außerdem kann vorgesehen sein, dass im Zustand S7 auch das Bedienelement 5.4 in der gleichen Leuchtfarbe leuchtet.

Es wäre auch denkbar, dass im Zustand S7 der Leuchtring nicht vollständig geschlossen ist, sondern lediglich im Vergleich zu dem später diskutierten Zustand S10 in größeren Bogenbereichen des Lenkradkranzes 3 leuchtet, die den linken Bogenbereich 10 und den rechten Bogenbereich 11 umfassen und deutlich darüber hinausgehen. Beispielsweise leuchtet im Zustand S7 der Lenkradkranz 3 bis auf einen ausgesparten oberen und/oder unteren Bogenbereich vollständig. Dies wäre genauso auch auf den Zustand S4 und den noch später diskutierten Zustand S15 übertragbar.

Sofern der Fahrmodus TAF-HON aktiviert wurde und die automatisierte Quer- und Längsführung des Fahrzeugs übernommen wurde, befindet sich die Lenkradanzeige 2 im Zustand S10, in dem die Lenkradanzeige lediglich an einem linken Bogenbereich 10 und an einem rechten Bogenbereich 10 des Lenkradkranzes 1 leuchtet, um zu signalisieren, dass der Fahrer seine Hände an diese Bogenbereiche 10, 11 des Lenkradkranzes 1 halten soll. Vorzugsweise leuchten die beiden Bogenbereich 10, 11 in der zweiten Leuchtfarbe (z. B. grün). Es wäre aber auch denkbar, dass im Zustand S10 statt in der zweiten Leuchtfarbe generell eine andere Leuchtfarbe (z. B. gelb) als die erste und zweite Leuchtfarbe verwendet wird. Außerdem könnte vorgesehen sein, dass die leuchtenden Bereiche blinken oder pulsieren.

Der Übergang in den Fahrmodus TAF-HON kann mit einer dynamischen Animation geschehen. Nach Betätigen des Bedienelements 5.7 ("ASSIST") folgen die Zwischenzustände S8, S9 und ggf. weitere nicht dargestellte Zwischenzustände, in denen die Beleuchtung der Lenkradanzeige 2 in der zweiten Leuchtfarbe (z. B. grün) sukzessive zunimmt, bis die Bereich 10 und 11 im Zustand S10 leuchten.

Im Zustand S10 leuchtet das Bedienelement 5.6 ("ASSIST") in der gleichen Leuchtfarbe wie die Lenkradanzeige 2. Außerdem kann vorgesehen sein, dass im Zustand S10 auch das Bedienelement 5.4 in der gleichen Leuchtfarbe leuchtet.

Es wäre denkbar, im Fahrmodus TAF-HON die Leuchtfarbe der Lenkradanzeige 2 davon abhängig zu machen, ob der Fahrer die Hände aktuell an dem Lenkrad 1 hält oder nicht: Wenn sich beispielsweise das Fahrzeug im Fahrmodus TAF-HON befindet und der Fahrer die Hände am Lenkrad 1 halten soll, leuchten die Bogenbereiche 10, 11 der Anzeige 2, an die er die Hand legen soll, in der zweiten Leuchtfarbe (z. B. grün), wenn eine Hands-on-Sensorik feststellt, dass mindestens eine Hand den Lenkradkranz 3 an einer beliebigen Stelle greift. Wenn sich das Fahrzeug im Fahrmodus TAF-HON befindet und der Fahrer die Hände am Lenkrad 1 halten soll, leuchten die Bogenbereiche 10, 11 der Anzeige 2, an die er die Hand legen soll, in der anderen Leuchtfarbe (z. B. gelb), wenn eine Hands-on-Sensorik feststellt, dass keine Hand den Lenkradkranz 3 an einer beliebigen Stelle greift.

Durch Betätigen des Bedienelements 5.5 ("MAN") kann der Fahrmodus ausgehend von den Fahrmodi HAF, TAF-HOF und TAF-HON in den manuellen Fahrmodus umgeschaltet werden, wobei dann die Lenkradanzeige 2 in umgekehrter Reihenfolge zur Aktivierung des automatisierten Fahrmodus sukzessive mit den beschriebenen Zwischenzuständen erlischt. Ein Übergang in diese Stufe kann also mit einer dynamischen Animation geschehen.

Durch Betätigen des Bedienelements 5.7 ("AUTO") kann von einem teilautomatisierten Fahrmodus TAF-HOF oder TAF-HON in den hochautomatisierten Fahrmodus HAF umgeschaltet werden, wohingegen im hochautomatisierten Fahrmodus HAF durch Betätigen des Bedienelements 5.6 ("ASSIST") in einen teilautomatisierten Fahrmodus umgeschaltet wird, wobei die Lenkradanzeige 2 entsprechend umgeschaltet wird (auf den Zustand S4 bzw. auf den Zustand S7 oder S10). Auch hier kann der Übergang von Zwischenleuchtzuständen begleitet sein.

Ferner kann das Fahrsystem den Fahrmodus selbstständig von einem teilautomatisierten Fahrmodus in den anderen teilautomatisierten Modus umgeschalten. In diesem Fall ändert sich die Lenkradanzeige 2 vom Zustand 7 auf den Zustand 10 bzw. vom Zustand S10 auf den Zustand S7. Auch hier kann der Übergang von Zwischenleuchtzuständen begleitet sein.

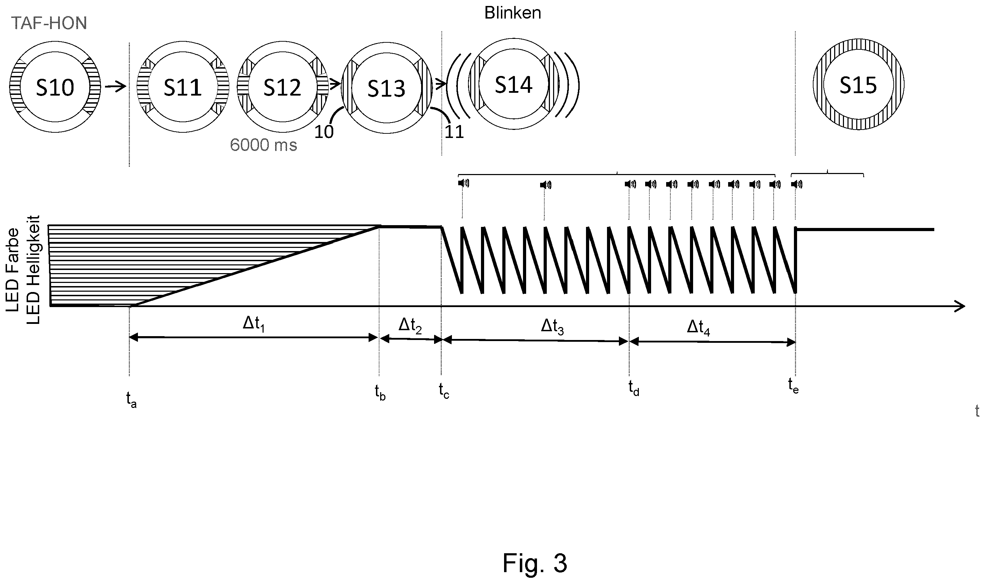

Nachfolgend wird im Zusammenhang mit Fig. 3 eine beispielhafte Implementierung der Signalisierung einer Hands-on-Aufforderung im teilautomatisierten Hands-on-Fahrmodus TAF-HON beschrieben. Die Veränderung der Farbe der Lenkradanzeige 2 und der Helligkeit der Lenkradanzeige über der Zeit t im Rahmen der Hands-on-Aufforderung ist in dem unteren Diagramm dargestellt.

Wenn die Hands-on-Detektionseinrichtung zum Zeitpunkt tₐ feststellt, dass keine Hand am Lenkrad 1 anliegt, beginnt die Lenkradanzeige 2 ausgehend vom Zustand S10 den Zustand zu ändern, um den Fahrer im Rahmen einer Hands-on-Aufforderung dazu aufzufordern, die Hände an das Lenkrad zu nehmen. Dabei geht der Leuchtzustand S10 der Lenkradanzeige 2 kontinuierlich innerhalb einer definierten Zeitspanne Δt₁ (z. B. 6 s) über die dargestellten Zwischenzustände S11 und S12 in den Zustand S13 über, in dem der linke und rechte beleuchtete Bereich 10 und 11 eine dritte Leuchtfarbe (z. B. rot) aufweist. Die geänderte dritte Leuchtfarbe (z. B. rot) entspricht in Fig. 3 der vertikal verlaufenden Schraffierung. Beim Übergang in den Zustand S13 werden die Bereiche 10 und 11 kontinuierlich mit der dritten Leuchtfarbe (z. B. rot) aufgefüllt. Die Veränderung des Leuchtzustands S10 kann unmittelbar danach beginnen, wenn die Hands-on-Detektionseinrichtung feststellt, dass keine Hand am Lenkrad anliegt. Alternativ kann die Veränderung des Leuchtzustands S10 auch erst dann beginnen, wenn die Hands-on-Detektionseinrichtung festgestellt hat, dass der Fahrer für eine bestimmte Zeitdauer (z. B. 2 s) keine Hand mehr am Lenkrad hatte, der Fahrer also nicht innerhalb dieser Zeitdauer mit mindestens einer Hand den Lenkradkranz gegriffen hat.

Wenn der Fahrer innerhalb der Zeitspanne Δt₁ des Übergangs mindestens eine Hand an den Lenkradkranz 3 legt, wechselt der Leuchtzustand der Lenkradanzeige 2 vorzugsweise sprungartig (d. h. ohne Zwischenzustände) in den Leuchtzustand S10 zurück.

Nach Erreichen des Leuchtzustands S13 zum Zeitpunkt t_{b} wird der Leuchtzustand für eine Zeitdauer Δt₂ (z. b. Δt₂ = 2s) beibehalten, sofern laut Überwachung durch die Hands-on-Detektionseinrichtung der Fahrer keine Hand an den Lenkradkranz 3 anlegt (ansonsten Rücksprung in den Leuchtzustand S10).

Sofern der Fahrer nach Verstreichen der Zeitdauer Δt₂ weiterhin keine Hand an das Lenkrad angelegt hat, ändert sich der Leuchtzustand S13 in den Leuchtzustand S14, in dem die Bereiche 10 und 11 in der dritten Leuchtfarbe (z. B. rot) blinken.

In diesem Zustand werden außerdem akustische Warnsignale an den Fahrer ausgegeben.

Nachdem der Fahrer für eine Zeitdauer Δt₃ (z. B. Δt₃ = 4s) ab dem Zeitpunkt t_{c} keine Hand an das Lenkrad angelegt hat, wird zum Zeitpunkt t_{d} über eine Anzeige im Cockpit oder im Head-Up-Display mitgeteilt, dass bei Nichtbefolgung der Hands-on-Aufforderung ein Nothaltemanöver automatisch durch das Fahrsystem durchgeführt wird.

Nachdem der Fahrer für eine Zeitdauer Δt₄ (z. B. Δt₄ = 4s) ab dem Zeitpunkt t_{d} keine Hand an das Lenkrad angelegt hat, wird zum Zeitpunkt tₑ ein Nothaltemanöver ausgelöst.

Ab diesem Zeitpunkt tₑ wechselt die Lenkradanzeige in den Zustand S15, in dem die Leuchtanzeige 2 als geschlossener Leuchtring in der dritten Leuchtfarbe (z. B. rot) leuchtet. Das Nothaltemanöver wird jetzt vom Fahrsystem ausgeführt.

Statt eines Nothaltemanövers wäre es auch denkbar, dass das Fahrsystem in Reaktion auf eine Nichtbefolgung der Hands-on-Aufforderung den Automatisierungszustand wechselt und das Fahrzeug beispielsweise in den manuellen Fahrbetrieb mit manuellen Fahrzeugführung versetzt.

Sofern ein teilautomatisierter Fahrmodus vom Fahrer durch eine oder mehrere Bedienhandlungen gewählt wurde, entscheidet das Fahrzeug beispielsweise in Abhängigkeit der aktuellen Umgebungssituation selbstständig, ob das Fahrzeug im teilautomatisierten Hands-off-Fahrmodus TAF-HOF oder im teilautomatisierten Hands-on-Fahrmodus TAF-HON betrieben wird. Die systemseitige Entscheidung für den teilautomatisierten Hands-off-Fahrmodus TAF-HOF ist in Fig. 2 mit "HOF" bezeichnet, während die systemseitige Entscheidung für den teilautomatisierten Hands-on-Fahrmodus TAF-HON in Fig. 2 mit "HON" bezeichnet ist.

Sofern der Fahrmodus TAF-HOF aktiviert wurde und die automatisierte Quer- und Längsführung des Fahrzeugs übernommen wurde, befindet sich die Lenkradanzeige 2 im Zustand S7, in dem die Lenkradanzeige 2 als geschlossener Leuchtring in der zweiten Leuchtfarbe (z. B. grün) leuchtet. Der Übergang in den Fahrmodus TAF-HOF kann mit einer dynamischen Animation geschehen. Nach Betätigen des Bedienelements 5.7 ("ASSIST") folgen die Zwischenzustände S5, S6 und ggf. weitere nicht dargestellte Zwischenzustände, in denen die Beleuchtung der Lenkradanzeige 2 in der zweiten Leuchtfarbe (z. B. grün) ausgehend von einem linken und rechten Bereich der Lenkradanzeige 2 sukzessive zunimmt, bis der gesamte Leuchtring im Zustand S7 leuchtet. Im Zustand S7 leuchtet das Bedienelement 5.6 ("ASSIST") in der gleichen Leuchtfarbe wie die Lenkradanzeige 2. Außerdem kann vorgesehen sein, dass im Zustand S7 auch das Bedienelement 5.4 in der gleichen Leuchtfarbe leuchtet.

Es wäre auch denkbar, dass im Zustand S7 der Leuchtring nicht vollständig geschlossen ist, sondern lediglich im Vergleich zu dem später diskutierten Zustand S10 in größeren Bogenbereichen des Lenkradkranzes 3 leuchtet, die den linken Bogenbereich 10 und den rechten Bogenbereich 11 umfassen und deutlich darüber hinausgehen. Beispielsweise leuchtet im Zustand S7 der Lenkradkranz 3 bis auf einen ausgesparten oberen und/oder unteren Bogenbereich vollständig. Dies wäre genauso auch auf den Zustand S4 und den noch später diskutierten Zustand S15 übertragbar.

Sofern der Fahrmodus TAF-HON aktiviert wurde und die automatisierte Quer- und Längsführung des Fahrzeugs übernommen wurde, befindet sich die Lenkradanzeige 2 im Zustand S10, in dem die Lenkradanzeige lediglich an einem linken Bogenbereich 10 und an einem rechten Bogenbereich 10 des Lenkradkranzes 1 leuchtet, um zu signalisieren, dass der Fahrer seine Hände an diese Bogenbereiche 10, 11 des Lenkradkranzes 1 halten soll. Vorzugsweise leuchten die beiden Bogenbereich 10, 11 in der zweiten Leuchtfarbe (z. B. grün). Es wäre aber auch denkbar, dass im Zustand S10 statt in der zweiten Leuchtfarbe generell eine andere Leuchtfarbe (z. B. gelb) als die erste und zweite Leuchtfarbe verwendet wird. Außerdem könnte vorgesehen sein, dass die leuchtenden Bereiche blinken oder pulsieren.

Der Übergang in den Fahrmodus TAF-HON kann mit einer dynamischen Animation geschehen. Nach Betätigen des Bedienelements 5.7 ("ASSIST") folgen die Zwischenzustände S8, S9 und ggf. weitere nicht dargestellte Zwischenzustände, in denen die Beleuchtung der Lenkradanzeige 2 in der zweiten Leuchtfarbe (z. B. grün) sukzessive zunimmt, bis die Bereich 10 und 11 im Zustand S10 leuchten.

Im Zustand S10 leuchtet das Bedienelement 5.6 ("ASSIST") in der gleichen Leuchtfarbe wie die Lenkradanzeige 2. Außerdem kann vorgesehen sein, dass im Zustand S10 auch das Bedienelement 5.4 in der gleichen Leuchtfarbe leuchtet.

Es wäre denkbar, im Fahrmodus TAF-HON die Leuchtfarbe der Lenkradanzeige 2 davon abhängig zu machen, ob der Fahrer die Hände aktuell an dem Lenkrad 1 hält oder nicht: Wenn sich beispielsweise das Fahrzeug im Fahrmodus TAF-HON befindet und der Fahrer die Hände am Lenkrad 1 halten soll, leuchten die Bogenbereiche 10, 11 der Anzeige 2, an die er die Hand legen soll, in der zweiten Leuchtfarbe (z. B. grün), wenn eine Hands-on-Sensorik feststellt, dass mindestens eine Hand den Lenkradkranz 3 an einer beliebigen Stelle greift. Wenn sich das Fahrzeug im Fahrmodus TAF-HON befindet und der Fahrer die Hände am Lenkrad 1 halten soll, leuchten die Bogenbereiche 10, 11 der Anzeige 2, an die er die Hand legen soll, in der anderen Leuchtfarbe (z. B. gelb), wenn eine Hands-on-Sensorik feststellt, dass keine Hand den Lenkradkranz 3 an einer beliebigen Stelle greift.

Durch Betätigen des Bedienelements 5.5 ("MAN") kann der Fahrmodus ausgehend von den Fahrmodi HAF, TAF-HOF und TAF-HON in den manuellen Fahrmodus umgeschaltet werden, wobei dann die Lenkradanzeige 2 in umgekehrter Reihenfolge zur Aktivierung des automatisierten Fahrmodus sukzessive mit den beschriebenen Zwischenzuständen erlischt. Ein Übergang in diese Stufe kann also mit einer dynamischen Animation geschehen.

Durch Betätigen des Bedienelements 5.7 ("AUTO") kann von einem teilautomatisierten Fahrmodus TAF-HOF oder TAF-HON in den hochautomatisierten Fahrmodus HAF umgeschaltet werden, wohingegen im hochautomatisierten Fahrmodus HAF durch Betätigen des Bedienelements 5.6 ("ASSIST") in einen teilautomatisierten Fahrmodus umgeschaltet wird, wobei die Lenkradanzeige 2 entsprechend umgeschaltet wird (auf den Zustand S4 bzw. auf den Zustand S7 oder S10). Auch hier kann der Übergang von Zwischenleuchtzuständen begleitet sein.

Ferner kann das Fahrsystem den Fahrmodus selbstständig von einem teilautomatisierten Fahrmodus in den anderen teilautomatisierten Modus umgeschalten. In diesem Fall ändert sich die Lenkradanzeige 2 vom Zustand 7 auf den Zustand 10 bzw. vom Zustand S10 auf den Zustand S7. Auch hier kann der Übergang von Zwischenleuchtzuständen begleitet sein.

Nachfolgend wird im Zusammenhang mit Fig. 3 eine beispielhafte Implementierung der Signalisierung einer Hands-on-Aufforderung im teilautomatisierten Hands-on-Fahrmodus TAF-HON beschrieben. Die Veränderung der Farbe der Lenkradanzeige 2 und der Helligkeit der Lenkradanzeige über der Zeit t im Rahmen der Hands-on-Aufforderung ist in dem unteren Diagramm dargestellt.

Wenn die Hands-on-Detektionseinrichtung zum Zeitpunkt tₐ feststellt, dass keine Hand am Lenkrad 1 anliegt, beginnt die Lenkradanzeige 2 ausgehend vom Zustand S10 den Zustand zu ändern, um den Fahrer im Rahmen einer Hands-on-Aufforderung dazu aufzufordern, die Hände an das Lenkrad zu nehmen. Dabei geht der Leuchtzustand S10 der Lenkradanzeige 2 kontinuierlich innerhalb einer definierten Zeitspanne Δt₁ (z. B. 6 s) über die dargestellten Zwischenzustände S11 und S12 in den Zustand S13 über, in dem der linke und rechte beleuchtete Bereich 10 und 11 eine dritte Leuchtfarbe (z. B. rot) aufweist. Die geänderte dritte Leuchtfarbe (z. B. rot) entspricht in Fig. 3 der vertikal verlaufenden Schraffierung. Beim Übergang in den Zustand S13 werden die Bereiche 10 und 11 kontinuierlich mit der dritten Leuchtfarbe (z. B. rot) aufgefüllt. Die Veränderung des Leuchtzustands S10 kann unmittelbar danach beginnen, wenn die Hands-on-Detektionseinrichtung feststellt, dass keine Hand am Lenkrad anliegt. Alternativ kann die Veränderung des Leuchtzustands S10 auch erst dann beginnen, wenn die Hands-on-Detektionseinrichtung festgestellt hat, dass der Fahrer für eine bestimmte Zeitdauer (z. B. 2 s) keine Hand mehr am Lenkrad hatte, der Fahrer also nicht innerhalb dieser Zeitdauer mit mindestens einer Hand den Lenkradkranz gegriffen hat.

Wenn der Fahrer innerhalb der Zeitspanne Δt₁ des Übergangs mindestens eine Hand an den Lenkradkranz 3 legt, wechselt der Leuchtzustand der Lenkradanzeige 2 vorzugsweise sprungartig (d. h. ohne Zwischenzustände) in den Leuchtzustand S10 zurück.

Nach Erreichen des Leuchtzustands S13 zum Zeitpunkt t_{b} wird der Leuchtzustand für eine Zeitdauer Δt₂ (z. b. Δt₂ = 2s) beibehalten, sofern laut Überwachung durch die Hands-on-Detektionseinrichtung der Fahrer keine Hand an den Lenkradkranz 3 anlegt (ansonsten Rücksprung in den Leuchtzustand S10).

Sofern der Fahrer nach Verstreichen der Zeitdauer Δt₂ weiterhin keine Hand an das Lenkrad angelegt hat, ändert sich der Leuchtzustand S13 in den Leuchtzustand S14, in dem die Bereiche 10 und 11 in der dritten Leuchtfarbe (z. B. rot) blinken.

In diesem Zustand werden außerdem akustische Warnsignale an den Fahrer ausgegeben.

Nachdem der Fahrer für eine Zeitdauer Δt₃ (z. B. Δt₃ = 4s) ab dem Zeitpunkt t_{c} keine Hand an das Lenkrad angelegt hat, wird zum Zeitpunkt t_{d} über eine Anzeige im Cockpit oder im Head-Up-Display mitgeteilt, dass bei Nichtbefolgung der Hands-on-Aufforderung ein Nothaltemanöver automatisch durch das Fahrsystem durchgeführt wird.

Nachdem der Fahrer für eine Zeitdauer Δt₄ (z. B. Δt₄ = 4s) ab dem Zeitpunkt t_{d} keine Hand an das Lenkrad angelegt hat, wird zum Zeitpunkt tₑ ein Nothaltemanöver ausgelöst.

Ab diesem Zeitpunkt tₑ wechselt die Lenkradanzeige in den Zustand S15, in dem die Leuchtanzeige 2 als geschlossener Leuchtring in der dritten Leuchtfarbe (z. B. rot) leuchtet. Das Nothaltemanöver wird jetzt vom Fahrsystem ausgeführt.

Statt eines Nothaltemanövers wäre es auch denkbar, dass das Fahrsystem in Reaktion auf eine Nichtbefolgung der Hands-on-Aufforderung den Automatisierungszustand wechselt und das Fahrzeug beispielsweise in den manuellen Fahrbetrieb mit manuellen Fahrzeugführung versetzt.

## Patentansprüche

1. Fahrsystem zum automatisierten Fahren für ein Kraftfahrzeug mit einer Lenkradanzeige (2), wobei zum automatisierten Fahren das Fahrsystem zumindest in einem ersten automatisierten Fahrmodus mit automatisierter Längs- und/oder Querführung und in einem davon verschiedenen zweiten automatisierten Fahrmodus mit automatisierter Längs- und/oder Querführung betreibbar ist, wobei
- das Fahrsystem eine Lenkradanzeige (2) mit Leuchtmitteln zum Leuchten eines Lenkrads (1) des Kraftfahrzeugs aufweist,
- die Lenkradanzeige (2) in verschiedenen, für den Fahrer unterscheidbaren Leuchtzuständen betreibbar ist,
- einer der beiden Fahrmodi ein teilautomatisierter Hands-on-Fahrmodus (TAF-HON) mit automatisierter Längs- und Querführung ist, bei dem ein Fahrer sowohl das System dauerhaft überwachen muss als auch ein oder zwei Hände am Lenkrad (1) halten muss,
- das Fahrsystem eine Hands-on-Detektionseinrichtung zur Erkennung eines Hand-Anliegens an dem Lenkrad (1) umfasst, und
das Fahrsystem eingerichtet ist,
- vorzugeben, welchen Leuchtzustand der verschiedenen Leuchtzustände die Lenkradanzeige (2) aufweist, und
- bei Betrieb des Fahrsystems im teilautomatisierten Hands-on-Fahrmodus (TAF-HON) eine Hands-on-Aufforderung zur Aufforderung, die Hände an das Lenkrad zu nehmen, auszugeben, wenn die Hands-on-Detektionseinrichtung kein Hand-Anliegen an dem Lenkrad erkennt, wobei die Hands-on-Aufforderung einen Wechsel des Leuchtzustands der Lenkradanzeige von einem Leuchtzustand (S10) in einen für den Fahrer von diesem Leuchtzustand unterscheidbaren, anderen Leuchtzustand (S13) umfasst, und
das Fahrsystem derart eingerichtet ist, dass in dem einen Leuchtzustand (S10) und in dem anderen Leuchtzustand (S13) die Lenkradanzeige (2) jeweils in einer unterschiedlichen, für den Fahrer unterscheidbaren Leuchtfarbe leuchtet.

2. Fahrsystem nach Anspruch 1, wobei das Fahrsystem zusätzlich eingerichtet ist:
- vorzugeben, dass bei Betrieb des Fahrsystems in dem ersten Fahrmodus die Lenkradanzeige in einem ersten Leuchtzustand leuchtet, und
- vorzugeben, dass bei Betrieb des Fahrsystems in dem zweiten Fahrmodus die Lenkradanzeige in einem von dem ersten Leuchtzustand für den Fahrer unterscheidbaren zweiten Leuchtzustand leuchtet.

3. Fahrsystem nach Anspruch 1 oder 2, wobei der erste und der zweite Fahrmodus zwei verschiedenen Fahrmodi aus einer Gruppe von drei Fahrmodi entsprechen, wobei die Gruppe umfasst:
- einen teilautomatisierten Hands-on-Fahrmodus (TAF-HON) mit automatisierter Längs- und Querführung, bei dem der Fahrer sowohl das System dauerhaft überwachen muss als auch ein oder zwei Hände am Lenkrad (1) halten muss,
- einen teilautomatisierten Hands-off-Fahrmodus (TAF-HOF) mit automatisierter Längs- und Querführung, bei dem der Fahrer das System dauerhaft überwachen muss, jedoch keine Hand am Lenkrad (1) halten muss, und
- einen hoch- oder vollautomatisierten Hands-off-Fahrmodus (HAF) mit automatisierter Längs- und Querführung, bei dem der Fahrer das System nicht dauerhaft überwachen muss und auch keine Hand am Lenkrad (1) halten muss.

4. Fahrsystem nach einem der vorhergehenden Ansprüche, wobei die Leuchtmittel Leuchtmittel zum Leuchten des Lenkradkranzes (3) sind.

5. Fahrsystem nach einem der vorhergehenden Ansprüche, wobei
- die Leuchtmittel Leuchtmittel zum Leuchten des Lenkradkranzes (3) sind, und
- das Fahrsystem derart eingerichtet ist, dass
- im zweiten Leuchtzustand (S10) der Lenkradkranz lediglich an einem linken Bogenbereich (10) und an einem rechten Bogenbereich (10) des Lenkradkranzes leuchtet, und
- im ersten Leuchtzustand (S7; S4) der Lenkradkranz (3) als geschlossener Lichtring oder zumindest in größeren Bogenbereichen des Lenkradkranzes, die den linken (10) und rechten (11) Bogenbereich umfassen und darüber hinausgehen, leuchtet.

6. Fahrsystem nach Anspruch 5 und Anspruch 3, wobei
- der erste Fahrmodus der teilautomatisierte Hands-off-Fahrmodus (TAF-HOF) oder der hoch- oder vollautomatisierte Hands-off-Fahrmodus (HAF) ist,
- der zweite Fahrmodus der teilautomatisierte Hands-on-Fahrmodus (TAF-HON) ist, und
- im zweiten Leuchtzustand (S10) der Lenkradkranz (3) lediglich an dem linken Bogenbereich (10) und an dem rechten Bogenbereich (11) des Lenkradkranzes leuchtet, um zu signalisieren, dass der Fahrer seine Hände an diese Bogenbereiche des Lenkradkranzes (3) halten soll.

7. Fahrsystem nach einem der vorhergehenden Ansprüche, wobei das Fahrsystem derart eingerichtet ist, dass
- im ersten Leuchtzustand (S4) die Lenkradanzeige (2) in einer ersten Leuchtfarbe leuchtet, und
- im zweiten Leuchtzustand (S7; S10) die Lenkradanzeige in einer zweiten, für den Fahrer von der ersten Leuchtfarbe unterscheidbaren zweiten Leuchtfarbe leuchtet.

8. Fahrsystem nach einem der vorhergehenden Ansprüche, wobei das Fahrsystem derart eingerichtet ist, dass im Rahmen des Wechsels des Leuchtzustands der eine Leuchtzustand (S10) kontinuierlich oder schrittweise in den anderen Leuchtzustand (S13) übergeht.

9. Fahrsystem nach Anspruch 8, wobei das Fahrsystem derart eingerichtet ist, dass im Rahmen des Wechsels des Leuchtzustands der oder die zunächst in einer bestimmten Leuchtfarbe leuchtenden Bereiche (10, 11) der Lenkradanzeige (2) mit einer anderen Leuchtfarbe kontinuierlich oder schrittweise aufgefüllt werden.

10. Fahrsystem nach einem der vorhergehenden Ansprüche, wobei
- einer der beiden Fahrmodi der teilautomatisierte Hands-on-Fahrmodus (TAF-HON) mit automatisierter Längs- und Querführung ist, bei dem der Fahrer sowohl das System dauerhaft überwachen muss als auch ein oder zwei Hände am Lenkrad (1) halten muss,
- das Fahrsystem eine Hands-on-Detektionseinrichtung zur Erkennung des Hand-Anliegens an das Lenkrad (1) umfasst, und
- das Fahrsystem eingerichtet ist, bei Betrieb des Fahrzeugs im teilautomatisierten Hands-on-Fahrmodus (TAF-HON)
- bei Hand-Anliegen an das Lenkrad (1) die Lenkradanzeige (2) in einem bestimmten Leuchtzustand leuchten zu lassen, und
- ohne Hand-Anliegen an das Lenkrad die Lenkradanzeige (2) in einem für den Fahrer von dem bestimmten Leuchtzustand unterscheidbaren anderen Leuchtzustand leuchten zu lassen.

11. Fahrsystem nach einem der vorhergehenden Ansprüche, wobei
- das Fahrerassistenzsystem ein beleuchtbares, insbesondere am Lenkrad angeordnetes Bedienelement (5.7) zur fahrerseitigen Auswahl des ersten Fahrmodus und ein beleuchtbares, insbesondere am Lenkrad angeordnetes Bedienelement (5.6; 5.4) zur fahrerseitigen Auswahl des zweiten Fahrmodus umfasst, und
- das Fahrsystem eingerichtet ist,
- im ersten Fahrmodus (HAF) sowohl die Lenkradanzeige (2) als auch das dem ersten Fahrmodus zugeordnete Bedienelement (5.7) in einer gemeinsamen Leuchtfarbe leuchten zu lassen, und
- im zweiten Fahrmodus (TAF-HOF; TAF-HON) sowohl die Lenkradanzeige (2) als auch das dem zweiten Fahrmodus zugeordnete Bedienelement (5.6; 5.4) in einer anderen, für den Fahrer unterscheidbaren gemeinsamen Leuchtfarbe leuchten zu lassen.

12. Anzeigeverfahren für ein Fahrsystem zum automatisierten Fahren eines Kraftfahrzeugs, wobei zum automatisierten Fahren das Fahrsystem zumindest in einem ersten automatisierten Fahrmodus mit automatisierter Längs- und/oder Querführung und in einem davon verschiedenen zweiten automatisierten Fahrmodus mit automatisierter Längs- und/oder Querführung betreibbar ist, wobei
- das Fahrsystem eine Lenkradanzeige (2) mit Leuchtmitteln zum Leuchten eines Lenkrads des Kraftfahrzeugs aufweist,
- die Lenkradanzeige (2) in verschiedenen, für den Fahrer unterscheidbaren Leuchtzuständen betreibbar ist,
- einer der beiden Fahrmodi ein teilautomatisierter Hands-on-Fahrmodus (TAF-HON) mit automatisierter Längs- und Querführung ist, bei dem ein Fahrer sowohl das System dauerhaft überwachen muss als auch ein oder zwei Hände am Lenkrad (1) halten muss,
- das Fahrsystem eine Hands-on-Detektionseinrichtung zur Erkennung eines des Hand-Anliegens an dem Lenkrad (1) umfasst
wobei gemäß dem Anzeigeverfahren
- bei Betrieb des Fahrsystems im teilautomatisierten Hands-on-Fahrmodus (TAF-HON) eine Hands-on-Aufforderung zur Aufforderung, die Hände an das Lenkrad zu nehmen, ausgegeben wird, wenn die Hands-on-Detektionseinrichtung kein Hand-Anliegen an dem Lenkrad erkennt, wobei die Hands-on-Aufforderung einen Wechsel des Leuchtzustands der Lenkradanzeige von einem Leuchtzustand (S10) in einen für den Fahrer von diesem Leuchtzustand unterscheidbaren, anderen Leuchtzustand (S13) umfasst, und
- in dem einen Leuchtzustand (S10) und in dem anderen Leuchtzustand (S13) die Lenkradanzeige (2) jeweils in einer unterschiedlichen, für den Fahrer unterscheidbaren Leuchtfarbe leuchtet.

13. Anzeigeverfahren nach Anspruch 12, wobei gemäß dem Anzeigeverfahren
- bei Betrieb des Fahrsystems in dem ersten Fahrmodus die Lenkradanzeige in einem ersten Leuchtzustand leuchtet, und
- bei Betrieb des Fahrsystems in dem zweiten Fahrmodus die Lenkradanzeige in einem von dem ersten Leuchtzustand für den Fahrer unterscheidbaren zweiten Leuchtzustand leuchtet.

## Claims

1. A driving system for automated driving for a motor vehicle with a steering wheel display (2), wherein for the automated driving the driving system is operable at least in a first automated driving mode with automated longitudinal and/or lateral guidance and in a second automated driving mode, different therefrom, with automated
longitudinal and/or lateral guidance, wherein
• the driving system comprises a steering wheel display (2) with illuminants for illuminating a steering wheel (1) of the motor vehicle,
• the steering wheel display (2) is operable in different illumination states distinguishable for the driver,
• one of the two driving modes is a partially automated hands-on
driving mode (TAF-HON) with automated longitudinal and
lateral guidance, in which a driver must both permanently
monitor the system and also must keep one or two hands on the steering wheel (1),
• the driving system comprises a hands-on detection device for detecting a hand contact on the steering wheel (1), and
the driving system is configured to,
• specify which illumination state of the different illumination states the steering wheel display (2) has, and
• during operation of the driving system in the partially automated hands-on driving mode (TAF-HON), output a hands-on request for requesting to place the hands on the steering wheel, when the hands-on detection device does not detect hand contact on the steering wheel, wherein the hands-on request comprises a change of the illumination state of the steering wheel display from one illumination state (S10) to another illumination state (S13) distinguishable for the driver from this illumination state, and
the driving system is configured such that in the one
illumination state (S10) and in the other illumination state (S13) the steering wheel display (2) illuminates in a different illumination color distinguishable for the driver in each case.

2. Driving system according to claim 1, wherein the driving system is additionally configured to:
• specify that during operation of the driving system in the first driving mode the steering wheel display illuminates in a first illumination state, and
• specify that during operation of the driving system in the second driving mode the steering wheel display illuminates in a second illumination state distinguishable for the driver from the first illumination state.

3. Driving system according to claim 1 or 2, wherein the first and the second driving mode correspond to two different driving modes from a group of three driving modes, wherein the group comprises:
• a partially automated hands-on driving mode (TAF-HON) with automated longitudinal and lateral guidance, in which the driver must both permanently monitor the system and also must keep one or two hands on the steering wheel (1),
• a partially automated hands-off driving mode (TAF-HOF) with automated longitudinal and lateral guidance, in which the driver must permanently monitor the system, but does not have to keep a hand on the steering wheel (1), and
• a highly or fully automated hands-off driving mode (HAF) with automated longitudinal and lateral guidance, in which the driver does not have to permanently monitor the system and also does not have to keep a hand on the steering wheel (1).

4. Driving system according to one of the preceding claims, wherein the illuminants are illuminants for illuminating the steering wheel rim (3).

5. Driving system according to one of the preceding claims, wherein
• the illuminants are illuminants for illuminating the steering wheel rim (3), and
• the driving system is configured such that
• in the second illumination state (S10) the steering wheel rim illuminates merely
at a left arc region (10) and at a right
arc region (10) of the steering wheel rim, and
• in the first illumination state (S7; S4) the steering wheel rim (3) illuminates as a closed light ring or at least in larger arc regions of the steering wheel rim, which comprise the left (10) and right (11) arc region and go beyond them.

6. Driving system according to claim 5 and claim 3, wherein
• the first driving mode is the partially automated hands-off driving mode (TAF-HOF) or the highly or fully automated hands-off driving mode (HAF),
• the second driving mode is the partially automated hands-on driving mode (TAF-HON), and
• in the second illumination state (S10) the steering wheel rim (3) illuminates merely at the left arc region (10) and at the right arc region (11) of the steering wheel rim, in order to signal that the driver should keep his hands at these arc regions of the steering wheel rim (3).

7. Driving system according to one of the preceding claims, wherein the driving system is configured such that
• in the first illumination state (S4) the steering wheel display (2) illuminates in a first illumination color, and
• in the second illumination state (S7; S10) the steering wheel display illuminates in a second illumination color distinguishable for the driver from the first illumination color.

8. Driving system according to one of the preceding claims, wherein the driving system is configured such that in the course of the change of the illumination state the one illumination state (S10) transitions continuously or stepwise into the other illumination state (S13).

9. Driving system according to claim 8, wherein the driving system is configured such that in the course of the change of the illumination state the region or regions (10, 11) of the steering wheel display (2) initially illuminating in a certain illumination color are filled continuously or stepwise with another illumination color.

10. Driving system according to one of the preceding claims, wherein
• one of the two driving modes is the partially automated hands-on driving mode (TAF-HON) with automated longitudinal and lateral guidance, in which the driver must both permanently monitor the system and also must keep one or two hands on the steering wheel (1),
• the driving system comprises a hands-on detection device for detecting the hand contact on the steering wheel (1), and
• the driving system is configured, during operation of the vehicle in the partially automated hands-on driving mode (TAF-HON),
• in case of hand contact on the steering wheel (1), to cause the steering wheel display (2) to illuminate in a certain illumination state, and
• without hand contact on the steering wheel, to cause the steering wheel display (2) to illuminate in another illumination state distinguishable for the driver from the certain illumination state.

11. Driving system according to one of the preceding claims, wherein
• the driver assistance system comprises an illuminable operating element (5.7), in particular arranged on the steering wheel, for driver-side
selection of the first driving mode and an illuminable
operating element (5.6; 5.4), in particular arranged on the steering wheel,
for driver-side selection of the second driving mode, and
• the driving system is configured,
• in the first driving mode (HAF), to cause both the steering wheel display (2) and also the operating element (5.7) assigned to the first driving mode to illuminate in a common illumination color, and
• in the second driving mode (TAF-HOF; TAF-HON), to cause both the steering wheel display (2) and also the operating element (5.6; 5.4) assigned to the second driving mode to illuminate in another common illumination color distinguishable for the driver.

12. Display method for a driving system for automated driving of a motor vehicle, wherein for automated driving the driving system is operable at least in a first automated driving mode with automated longitudinal and/or lateral guidance and in a second automated driving mode, different therefrom, with automated
longitudinal and/or lateral guidance, wherein
• the driving system comprises a steering wheel display (2) with illuminants for illuminating a steering wheel of the motor vehicle,
• the steering wheel display (2) is operable in different illumination states distinguishable for the driver,
• one of the two driving modes is a partially automated hands-on
driving mode (TAF-HON) with automated longitudinal and
lateral guidance, in which a driver must both permanently
monitor the system and also must keep one or two hands on the steering wheel (1),
• the driving system comprises a hands-on detection device for detecting a hand contact on the steering wheel (1),
wherein according to the display method
• during operation of the driving system in the partially automated hands-on driving mode (TAF-HON) a hands-on request for
requesting to place the hands on the steering wheel is output,
when the hands-on detection device does not detect hand contact on the steering wheel, wherein the hands-on request comprises a change of the illumination state of the steering wheel display from one illumination state (S10) to another illumination state (S13) distinguishable for the driver from this illumination state, and
• in the one illumination state (S10) and in the other illumination state (S13) the steering wheel display (2) illuminates in a different illumination color
distinguishable for the driver in each case.

13. Display method according to claim 12, wherein according to the display method
• during operation of the driving system in the first driving mode the steering wheel display illuminates in a first illumination state, and
• during operation of the driving system in the second driving mode the steering wheel display illuminates in a second illumination state distinguishable for the driver from the first illumination state.

## Revendications

1. Système de conduite pour conduite automatisée pour un véhicule automobile avec un affichage de volant (2), le système de conduite étant exploitable pour la conduite automatisée au moins dans un premier mode de conduite automatisé avec guidage longitudinal et/ou latéral automatisé et dans un deuxième mode de conduite automatisé, différent de celui-ci, avec guidage
longitudinal et/ou latéral automatisé, dans lequel
• le système de conduite comporte un affichage de volant (2) avec des moyens d'éclairage pour
éclairer un volant (1) du véhicule automobile,
• l'affichage de volant (2) est exploitable dans différents états d'éclairage distinguables pour le conducteur,
• l'un des deux modes de conduite est un mode de conduite mains sur le volant partiellement automatisé (TAF-HON) avec guidage longitudinal et
latéral automatisé, dans lequel un conducteur doit à la fois
surveiller le système en permanence et doit aussi
maintenir une ou deux mains sur le volant (1),
• le système de conduite comporte un dispositif de détection mains sur le volant pour
détecter un contact de main sur le volant (1), et
le système de conduite est configuré pour,
• spécifier quel état d'éclairage des différents états d'éclairage l'affichage de volant (2) présente, et
• lors du fonctionnement du système de conduite dans le mode de conduite mains sur le volant partiellement automatisé (TAF-HON), émettre une demande mains sur le volant pour demander de placer les mains sur le volant,
lorsque le dispositif de détection mains sur le volant ne détecte pas de contact de main sur le volant, la demande mains sur le volant comprenant un changement de l'état d'éclairage de l'affichage de volant d'un
état d'éclairage (S10) vers un autre état d'éclairage (S13) distinguable pour le conducteur de cet
état d'éclairage, et le système de conduite est configuré de telle sorte que dans l'un des états d'éclairage (S10) et dans l'autre état d'éclairage (S13) l'affichage de volant (2) s'éclaire dans une couleur d'éclairage différente distinguable pour le conducteur dans chaque cas.

2. Système de conduite selon la revendication 1, dans lequel le système de conduite est en outre configuré pour :
• spécifier que lors du fonctionnement du système de conduite dans le premier mode de conduite l'affichage de volant s'éclaire dans un premier état d'éclairage, et
• spécifier que lors du fonctionnement du système de conduite dans le deuxième mode de conduite l'affichage de volant s'éclaire dans un deuxième état d'éclairage distinguable pour le conducteur du premier état d'éclairage.

3. Système de conduite selon la revendication 1 ou 2, dans lequel le premier et le deuxième mode de conduite correspondent à deux modes de conduite différents d'un groupe de trois modes de conduite, le groupe comprenant :
• un mode de conduite mains sur le volant partiellement automatisé (TAF-HON) avec
guidage longitudinal et latéral automatisé, dans lequel le conducteur doit à la fois surveiller le système en permanence et doit aussi maintenir une ou deux mains sur le volant (1),
• un mode de conduite mains libres partiellement automatisé (TAF-HOF) avec guidage longitudinal et latéral automatisé, dans lequel le conducteur doit surveiller le système en permanence, mais ne doit pas
maintenir une main sur le volant (1), et
• un mode de conduite mains libres hautement ou entièrement automatisé (HAF) avec guidage longitudinal et latéral automatisé, dans lequel le conducteur ne doit pas surveiller le système en permanence et ne doit pas non plus maintenir une main sur le volant (1).

4. Système de conduite selon l'une des revendications précédentes, dans lequel les moyens d'éclairage sont des moyens d'éclairage pour éclairer la couronne de volant (3).

5. Système de conduite selon l'une des revendications précédentes, dans lequel
• les moyens d'éclairage sont des moyens d'éclairage pour éclairer la couronne de volant (3), et
• le système de conduite est configuré de telle sorte que
• dans le deuxième état d'éclairage (S10) la couronne de volant s'éclaire uniquement au niveau d'une région d'arc gauche (10) et au niveau d'une région d'arc droite (10) de la couronne de volant, et
• dans le premier état d'éclairage (S7 ; S4) la couronne de volant (3) s'éclaire en tant qu'anneau lumineux fermé ou au moins dans des régions d'arc plus grandes de la couronne de volant, qui comprennent la région d'arc gauche (10) et la région d'arc droite (11) et vont au-delà d'elles.

6. Système de conduite selon la revendication 5 et la revendication 3, dans lequel
• le premier mode de conduite est le mode de conduite mains libres partiellement automatisé (TAF-HOF) ou le mode de conduite mains libres hautement ou entièrement automatisé (HAF),
• le deuxième mode de conduite est le mode de conduite mains sur le volant partiellement automatisé (TAF-HON), et
• dans le deuxième état d'éclairage (S10) la couronne de volant (3) s'éclaire uniquement au niveau de la région d'arc gauche (10) et au niveau de la région d'arc droite (11) de la couronne de volant, afin de signaler que le conducteur doit maintenir ses mains à ces régions d'arc de la couronne de volant (3).

7. Système de conduite selon l'une des revendications précédentes, dans lequel le système de conduite est configuré de telle sorte que
• dans le premier état d'éclairage (S4) l'affichage de volant (2) s'éclaire dans une première couleur d'éclairage, et
• dans le deuxième état d'éclairage (S7 ; S10) l'affichage de volant s'éclaire dans une
deuxième couleur d'éclairage distinguable pour le conducteur de la première couleur d'éclairage.

8. Système de conduite selon l'une des revendications précédentes, dans lequel le système de conduite est configuré de telle sorte que dans le cadre du changement de l'état d'éclairage l'un des états d'éclairage (S10) passe de manière continue ou par étapes dans l'autre état d'éclairage (S13).

9. Système de conduite selon la revendication 8, dans lequel le système de conduite est configuré de telle sorte que dans le cadre du changement de l'état d'éclairage la ou les régions (10, 11) de l'affichage de volant (2) s'éclairant initialement dans une certaine couleur d'éclairage sont remplies de manière continue ou par étapes avec une autre couleur d'éclairage.

10. Système de conduite selon l'une des revendications précédentes, dans lequel
• l'un des deux modes de conduite est le mode de conduite mains sur le volant partiellement automatisé (TAF-HON) avec guidage longitudinal et
latéral automatisé, dans lequel le conducteur doit à la fois surveiller le système en permanence et doit aussi maintenir une ou deux mains sur le volant (1),
• le système de conduite comporte un dispositif de détection mains sur le volant pour détecter le contact de main sur le volant (1), et
• le système de conduite est configuré, lors du fonctionnement du véhicule dans le mode de conduite mains sur le volant partiellement automatisé (TAF-HON),
• en cas de contact de main sur le volant (1), pour faire en sorte que l'affichage de volant (2) s'éclaire dans un certain état d'éclairage, et
• sans contact de main sur le volant, pour faire en sorte que l'affichage de volant (2) s'éclaire dans un autre état d'éclairage distinguable pour le conducteur du certain état d'éclairage.

11. Système de conduite selon l'une des revendications précédentes, dans lequel
• le système d'assistance au conducteur comporte un élément de commande éclairable (5.7), en particulier disposé sur le volant, pour la sélection côté conducteur du premier mode de conduite et un élément de commande éclairable (5.6 ; 5.4), en particulier disposé sur le volant, pour la sélection côté conducteur du deuxième mode de conduite, et
• le système de conduite est configuré,
• dans le premier mode de conduite (HAF), pour faire en sorte que l'affichage de volant (2) ainsi que l'élément de commande (5.7) associé au premier mode de conduite s'éclairent dans une couleur d'éclairage commune, et
• dans le deuxième mode de conduite (TAF-HOF ; TAF-HON), pour faire en sorte que l'affichage de volant (2) ainsi que l'élément de commande (5.6 ; 5.4) associé au deuxième mode de conduite s'éclairent dans une autre couleur d'éclairage commune distinguable pour le conducteur.

12. Procédé d'affichage pour un système de conduite pour conduite automatisée d'un véhicule automobile, le système de conduite étant exploitable pour la conduite automatisée au moins dans un premier mode de conduite automatisé avec
guidage longitudinal et/ou latéral automatisé et dans un deuxième mode de conduite automatisé, différent de celui-ci, avec guidage longitudinal et/ou latéral automatisé, dans lequel
• le système de conduite comporte un affichage de volant (2) avec des moyens d'éclairage pour éclairer un volant du véhicule automobile,
• l'affichage de volant (2) est exploitable dans différents états d'éclairage distinguables pour le conducteur,
• l'un des deux modes de conduite est un mode de conduite mains sur le volant partiellement automatisé (TAF-HON) avec guidage longitudinal et latéral automatisé, dans lequel un conducteur doit à la fois surveiller le système en permanence et doit aussi maintenir une ou deux mains sur le volant (1),
• le système de conduite comporte un dispositif de détection mains sur le volant pour
détecter un contact de main sur le volant (1),
dans lequel selon le procédé d'affichage
• lors du fonctionnement du système de conduite dans le mode de conduite mains sur le volant partiellement automatisé (TAF-HON) une demande mains sur le volant pour demander de placer les mains sur le volant est émise, lorsque le dispositif de détection mains sur le volant ne détecte pas de contact de main sur le volant, la demande mains sur le volant comprenant un changement de l'état d'éclairage de l'affichage de volant d'un état d'éclairage (S10) vers un autre état d'éclairage (S13) distinguable pour le conducteur de cet état d'éclairage, et
• dans l'un des états d'éclairage (S10) et dans l'autre état d'éclairage (S13) l'affichage de volant (2) s'éclaire dans une couleur d'éclairage différente distinguable pour le conducteur dans chaque cas.

13. Procédé d'affichage selon la revendication 12, dans lequel selon le procédé d'affichage
• lors du fonctionnement du système de conduite dans le premier mode de conduite l'affichage de volant s'éclaire dans un premier état d'éclairage, et
• lors du fonctionnement du système de conduite dans le deuxième mode de conduite l'affichage de volant s'éclaire dans un deuxième état d'éclairage distinguable pour le conducteur du premier état d'éclairage.
